# NEUE EUROPÄISCHE PATENTSCHRIFT

(11) **EP 0 400 305 B2**
(45) Veröffentlichungstag und Bekanntmachung des Hinweises auf die Entscheidung über den Einspruch: **21.03.2001**
(45) Hinweis auf die Patenterteilung: 10.07.1996
(21) Anmeldenummer: 90106763.7
(22) Anmeldetag: 09.04.1990
(51) Int. Cl.: B41M 5/26, C08K 11/00

(54) **Mit Laserlicht beschriftbare hochpolymere Materialien**
Laser markable polymerous materials
Matériaux polymères d'inscription par laser

(30) Priorität: 27.05.1989 DE 3917294
(43) Veröffentlichungstag der Anmeldung: 05.12.1990
(73) Patentinhaber: Degussa-Hüls Aktiengesellschaft, 60287 Frankfurt am Main (DE)
(72) Erfinder: Schüler, Ralf, Dr., D-4350 Recklinghausen (DE); Herkt-Maetzky, Christian, Dr., D-4358 Haltern (DE); Bartz, Wilfried, Dr., D-4370 Marl (DE)

(56) Entgegenhaltungen:
- EP-A- 0 111 357
- EP-A- 0 190 997
- EP-A- 0 329 884
- EP-A- 0 330 869
- EP-A- 0 367 629
- WO-A-90/08805
- DE-A- 1 169 122
- DE-A- 1 245 591
- DE-A- 2 936 926
- FR-A- 2 362 186
- GB-A- 1 186 236
- JP-A- 60 226 554
- JP-A- 63 179 921
- US-A- 3 935 157
- US-A- 4 567 220
- US-A- 4 687 802
- Römpp's Chemie Lexikon, 9. Auflage, Georg Thieme Verlag, Stuttgart, New York (1989), Seiten 1298, 1299, 1306, 5029, 4629 und 4630

## Beschreibung

Gegenstand der Erfindung sind Formmassen, Halbzeuge oder Fertigteile aus hochpolymeren Materialien und ihre Verwendung zur Markierung oder Beschriftung mittels Laserlicht sowie ein geeignetes Verfahren hierzu.

Zweck der Erfindung ist es, über ein Verfahren zu verfügen, mit dem man einen polymeren Werkstoff so einstellen kann, daß eine genügend kontrastreiche Beschriftung mit Laserlicht erzeugt werden kann, ohne dadurch andere Material- und Gebrauchseigenschaften zu beeinträchtigen.

Aus FR 2 362 186 ist ein Polyvinylchlorid (PVC)-Compound bekannt, das unter anderem MoO₃ in Mengen von 1 bis 8 Gewichtsprozent als flammhemmenden und rauchvermindernden Zuschlagstoff enthält.

Aus EP-0 063 768 ist ferner eine PVC-Mischung bekannt, die als Additiv ein Cu₃(PO₄)₂ Cu(OH)₂ in Mengen von 0,1 bis 20 Gewichtsprozent enthält; diese Mischung zeigt nicht die durch Kupferverbindungen sonst üblichen Verfärbungen. Die Mischung zeigt eine merkliche Rauchverminderung unter schwelenden oder flammenden Bedingungen und eine Verminderung der Entflammbarkeit.

Aus US-3,935,157 ist ein elektrischer Isolierstoff aus Polycarbonat (PC) mit verbesserter Kriechstromfestigkeit bekannt. Dazu wird das PC mit einem Stoff versetzt, der üblicherweise als Katalysator für die Oxidation oder Verbrennung von PC wirkt. Dieser Zuschlagstoff ist eine Übergangsmetallverbindung mit einem positiven Oxidationspotential von größer als +0,2 Volt. Als Beispiele sind unter anderem ein Molybdän(VI)-Oxid und ein Mischka-talysator aus V₂O₅, P₂O₅ und CuO genannt.

Es ist bekannt, die Beschriftbarkeit eines polymeren Materials mittels Laserlicht dadurch zu erzielen, daß man dem Kunststoff des Grundmaterials einen sich bei Einwirkung von Energiestrahlung verfärbenden Füllstoff beimischt. Wenn man die Füllstoffkosten niedrig halten will, wird der Füllstoff dem Kunststoff des Grundmaterials nur partiell beigemischt (DE-OS 29 36 926). Insbesondere kann man nach Einarbeiten von Ruß oder Graphit als Füllstoff im Konzentrationsbereich von 0,08 bis 0,125 % auf der Kunststoffoberfläche eine kontrastreiche helle Beschriftung in der natürlichen Farbe des Kunststoffes auf schwarzem Grund durch Laserbestrahlung erzeugen. Den Weißgrad der Schriftzeichen kann man durch optische Aufheller verbessern, die den Pigmenten beigefügt werden und die durch das Laserlicht nicht zerstört werden (DE-PS 30 44 722).

Weiterhin sind Formteile - bestehend aus Thermoplasten, die ein Polymer mit aromatischen Strukturen enthalten - bekannt, die eine sehr gute Schwarzfärbung infolge der Laserbestrahlung auch ohne einen verfärb-baren Zuschlagstoff zeigen. Die verschiedenen Thermoplast-Typen reagieren jedoch sehr unterschiedlich; größere Abstimmungen in den Verfahrensparametern und gegebenenfalls auch in den Werkstoff-Modifikationen sind notwendig. Eine auf das Laserlicht optimal eingestellte Einfärbung ist erforderlich, deren Lichtstabilität sich in dem für die jeweilige Produktklasse üblichen Rahmen hält. Bei größeren Formteilen ergeben sich in Abhängigkeit vom Thermoplast-Typ Einschränkungen bei der Verarbeitung (Kunststoffe 78 (1988), Heft 8, Seiten 688 bis 691).

Durch das Mischen von Polycarbonat mit 10 bis 50 % aromatischem Polyester entsteht ein gut laserbeschriftbarer Werkstoff mit guter Wärmestabilität und Spannungsrißbeständigkeit (EP-0 249 082).

Schließlich ist ein Verfahren zur Laserbeschriftung von hochmolekularem organischen Material bekannt, bei dem durch Einarbeiten von Zuschlagstoffen eine gute Beschriftbarkeit erzielt wird (EP-0 190 997). Insbesondere werden als eine Verfärbung verursachende Zuschlagstoffe handelsübliche Pigmente und/oder poly-merlösliche Farbstoffe eingesetzt. Auf der Oberfläche der mit diesen Zuschlagstoffen farbig eingestellten Werkstoffe kann mit Hilfe eines bevorzugt frequenzver-doppelten Nd-YAG-Lasers (Wellenlänge 532 nm nach Frequenzverdopplung) eine Beschriftung mit ausreichendem Kontrast erzeugt werden.

Aus EP-0 330 869 ist ein laserbeschriftbarer Kunststoff bekannt, der kleine Mengen Titandioxid und gegebenenfalls Ruß sowie einen die Kriechstromfestigkeit begünstigenden Zuschlagstoff enthält. Daraus werden laserbeschriftbare Formteile hergestellt. Zur Beschriftung wird der Lichtstrahl eines Nd-YAG-Lasers mit einer Wellenlänge 1,064 µm genutzt. Bei der Laserbeschriftung bleibt das TiO₂ in der beschrifteten Fläche erhalten und verhindert eine völlige Schwarzfärbung. Mit steigendem TiO₂-Anteil nimmt deshalb das Kontrastverhältnis ab. EP-0 330 869 gehört nach Artikel 54 (3) und (4) EPÜ für die Vertragsstaaten DE, ES, FR, GB, IT und NL zum Stand der Technik.

Nach dem Stand der Technik kann man also einen Kunststoff so einstellen, daß er mit Laserlicht beschriftet werden kann, sei es durch Wahl eines gut laserbeschrift-baren Thermoplast-Typs oder durch Einarbeiten eines sich infolge der Laserbestrahlung verfärbenden Zuschlagstoffes. Beide Methoden führen zwar häufig zu einem Produkt, das sich ausreichend kontrastreich mit Laserlicht beschriften läßt. Jedoch werden dann weitere geforderte anwendungstechnische Werkstoffeigenschaften nur in ungenügendem Maße erfüllt. Ein modu-lartiger Aufbau eines kompletten Anwendungsprofils, wobei eine der Anforderungen die Laserbeschriftbarkeit ist, ist nach dem Stand der Technik nicht realisierbar.

Dieser Mangel wird an einem Beispiel aus der Datentechnik verdeutlicht. Bei Kappen für Computer-Tastaturen muß das Kontrastverhältnis der beschrifteten Tastenkappen mindestens 3:1 betragen. Die Tastaturen sollen aus Kostengründen mit einer Laseranlage beschriftet werden. Neben der Anforderung "Laserbeschriftbarkeit" muß der Tastaturwerkstoff eine hohe Abriebbeständigkeit haben und in einer bestimmten Farbe eingestellt sein. Bisher ist hierfür keine befriedigende Lösung bekannt, weil nach erfolgter Materialauswahl entweder die Materialeigenschaften und die Farbeinstellung den Anforderungen entsprechen, jedoch die Laserbeschriftbarkeit ungenügend ist, oder das Material gut laserbeschriftbar ist, aber die übrigen Materialeigenschaften nicht zufriedenstellend sind.

Der Erfindung liegt die Aufgabe zugrunde, Formmassen, Halbzeuge und Fertigteile aus hochpolymerem Material zur Markierung und/oder Beschriftung mittels Laserlicht bereitzustellen. Dabei soll bei der Markierung/Beschriftung ein vorgeschriebener Mindestwert des Kontrastverhältnisses erreicht werden. Die Laserbeschriftbarkeit soll unabhängig vom Werkstofftyp und der eingestellten Farbe der Formmasse sein.

Diese Aufgabe wird erfindungsgemäß dadurch gelöst, daß die Formmassen - und damit die daraus hergestellten Halbzeuge und Fertigteile - aus polymerem Material zur Markierung und/oder Beschriftung mittels Laserlicht einen Zuschlagstoff enthalten, der im sichtbaren Spektralbereich (Lichtwellenlänge 400 bis 750 nm) keine oder nur eine schwache Eigenfarbe hat und der unter Einwirkung von absorbier-tem infrarotem Laserlicht im sichtbaren Spektralbereich eine Markierung mit großem Farbkontrast ergibt, wobei das Laserlicht durch den Zuschlagstoff absorbiert wird, und der Zuschlagstoff ausgewählt ist aus 0,02 bis 4,5 Massen -% Kupferhydroxidphosphat und 0,2 bis 2,5 Massen -% Molybdän (VI)- Oxid. Der Farbkontrast kann beispielsweise dadurch entstehen, daß sich der Zuschlagstoff unter Einwirkung von absorbiertem Laserlicht zu einem farbigen Produkt verändert. Die Wellenlänge des Laserlichtes liegt im Infrarot-Bereich oberhalb 900 nm. Als Laser kann beispielsweise ein Nd-YAG-Laser (Wellenlänge 1064 nm) verwendet werden.

Als Zuschlagstoff werden 0,02 bis 4,5 Massen-% Kupfer(II)-hydroxid-phosphat (im folgenden als CHP abgekürzt) oder 0,2 bis 2,5 Massen-% Molyb-dän (IV)-Oxid (MoO₃) eingesetzt. Neben dem farblosen oder nur schwach gefärbten Zuschlagstoff kann die Formmasse weitere Pigmente und/oder Farbstoffe zum Zwecke der Einfärbung enthalten.

Die Herstellung von CHP (Cu₃(PO₄)₂. Cu(OH)₂; Libethenit) ist z. B. beschrieben in Gmelins Handbuch der anorganischen Chemie, Band 60, Teil A, Seite 175 und Teil B, Seiten 920 bis 925. Bevorzugt wird ein CHP, das entsprechend EP-0 143 933 hergestellt wurde.

Die erfindungsgemäßen Formmassen, Halbzeuge und Fertigteile zur Markierung und/oder Beschriftung mittels Laserlicht haben folgende Vorteile:
- Der eingesetzte Zuschlagstoff ist im sichtbaren Spektralbereich (400 bis 750 nm) praktisch farblos. Die einen derartigen Zuschlagstoff enthaltenden Formmassen sind mit Pigmenten und/oder Farbstoffen beliebig einfärbbar.
- Der Zuschlagstoff beeinflußt die mechanischen Eigenschaften der Formmassen, Halbzeuge und Fertigteile nicht.
- Der Zuschlagstoff hat im infraroten Spektralbereich ein großes Absorptionsvermögen und ist damit empfindlich gegen infrarotes Laserlicht.
- Zum Beschriften der Halbzeuge und Fertigteile wird ein Infrarot-Laser (ohne Frequenzverdopplung) eingesetzt.
- Eine Vielzahl polymerer Werkstoffe - unabhängig von Werkstoff-Typ, Farbeinstellung und sonstigen eingearbeiteten Stoffen - ist bei Einhaltung anderer Materialeigenschaften mit absorbiertem Laserlicht beschriftbar.
- Die Beschriftung hat ein großes Kontrastverhältnis. Zum Steigern des Kontrastes sind keinerlei zusätzliche Hilfsstoffe (wie optische Aufheller) erforderlich.
- Der eingesetzte Zuschlagstoff verursacht nur einen geringen Aufwand, auch dann, wenn die gesamte Formmasse den Zuschlagstoff in der angegebenen Konzentration enthält.
- Die auf den Halbzeugen und Fertigteilen angebrachten Zeichen haben eine hervorragende Lichtbeständigkeit.
- Auch bei großen Formteilen ergeben sich keine Einschränkungen beim Verarbeiten der Formmassen und Halbzeuge.

Die erfindungsgemäßen Formmassen, Halbzeuge und Fertigteile zur Markierung und/oder Beschriftung mittels Laserlicht werden in den folgenden Beispielen weiter erläutert.

Unter "Teilen" werden Massenteile verstanden. Das Kontrastverhältnis K wird nach dem aus der Literatur bekannten Verfahren gemessen. Für dunkle Zeichen auf hellem Grund ist es definiert als Quotient von Hinter-grundleuchtdichte zu Zeichenleuchtdichte. In den Beispielen 1 bis 14 wird zum Beschriften von Halbzeugen und Fertigteilen ein Nd-YAG-Laser mit einer Wellenlänge von 1064 nm im Pulsbetrieb, einer Pulsfrequenz von 8 kHz und einer Laserleistung von ca. 5 W eingesetzt. Die Beleuchtungsstärke in der Beschriftungsebene beträgt ca. 100 J· cm⁻². Die jeweils erzeugte dunkle Markierung ist gut erkennbar; ihre Oberflächenbeschaffenheit unterscheidet sich kaum von der Beschaffenheit einer unbelichteten Stelle.

### Beispiel 1

Auf Spritzgußplatten, bestehend aus 100 Teilen Polybutylenterephthalat (PBT) und 1 Teil CHP, wird eine dunkle Beschriftung auf naturfarbenem Untergrund mit dem Kontrast K = 7,6 erzeugt.

### Beispiel 2

Auf Spritzgußplatten analog zu Beispiel 1, die zusätzlich 1 Teil rotes Eisenoxid enthalten, wird eine dunkle Beschriftung auf rotem Untergrund mit K = 4,3 erzeugt.

### Beispiel 3

Auf Spritzgußplatten analog zu Beispiel 1, die zusätzlich 0,5 Teile Titanatgelb enthalten, wird eine dunkle Beschriftung auf gelbem Untergrund mit K = 5,8 erzeugt.

### Beispiel 4

Auf Spritzgußplatten analog zu Beispiel 1, die zusätzlich 1 Teil Titandioxid enthalten, wird eine dunkle Beschriftung auf weißem Untergrund mit K=8,5 erzeugt.

### Beispiel 5

Auf Spritzgußplatten, bestehend aus 100 Teilen PBT und 1 Teil MoO₃, wird eine dunkle Beschriftung auf naturfarbenem Untergrund mit K = 3,8 erzeugt.

### Beispiel 6

Auf Spritzgußplatten, bestehend aus 100 Teilen Polyethylen und 1,5 Teilen CHP, wird eine dunkle Beschriftung auf naturfarbenem Untergrund mit K = 7,5 erzeugt.

### Beispiel 7

Auf Spritzgußplatten, bestehend aus 100 Teilen Polypropylen und 1,5 Teilen CHP, wird eine dunkle Beschriftung auf naturfarbenem Untergrund mit K = 7,2 erzeugt.

### Beispiel 8

Auf Spritzgußplatten, bestehend aus 100 Teilen Polystyrol und 1,5 Teilen CHP, wird eine dunkle Beschriftung auf naturfarbenem Untergrund mit K = 8,1 erzeugt.

### Beispiel 9

Auf Spritzgußplatten, bestehend aus 100 Teilen Polyamid 6.6 und 1,5 Teilen CHP, wird eine dunkle Beschriftung auf naturfarbenem Untergrund mit K = 7,8 erzeugt.

### Beispiel 10

Auf Spritzgußplatten, bestehend aus 100 Teilen Polyamid 6 und 1,5 Teilen CHP, wird eine dunkle Beschriftung auf naturfarbenem Untergrund mit K = 7,7 erzeugt.

### Beispiel 11

Auf Spritzgußplatten, bestehend aus 100 Teilen Polyamid 12 und 1,5 Teilen CHP, wird eine dunkle Beschriftung auf naturfarbenem Untergrund mit K = 6,5 erzeugt.

### Beispiel 12

Auf Kondensatorbechern, hergestellt aus einer Formmasse, die aus 100 Teilen selbstverlöschend eingestelltem PBT und 1,4 Teilen CHP besteht, wird eine dunkle Beschriftung auf gelb-grünem Untergrund mit K = 4,8 erzeugt.

### Beispiel 13

Auf Tastenkappen, hergestellt aus einer Formmasse, die aus 100 Teilen PBT insgesamt 0,8 Teilen verschiedener Pigmente und 1,7 Teilen CHP besteht, wird eine dunkle Beschriftung auf beigefarbenem Untergrund mit K = 4,5 erzeugt.

### Beispiel 14

Auf Steckerleisten, hergestellt aus einer Formmasse, die aus 100 Teilen selbstverlöschend eingestelltem mit Glasfasern verstärktem PBT und 0,4 Teilen CHP besteht, wird eine dunkle Beschriftung auf fast weißem Untergrund mit K = 3,9 erzeugt.

## Patentansprüche

1. Verwendung von Formmassen, Halbzeugen oder Fertigteilen aus hochpolymerem Material, welches einen Zuschlagstoff enthält, der im sichtbaren Spektralbereich (Wellenlänge 400 nm bis 750 nm) keine oder nur eine schwache Eigenfarbe hat und der unter Einwirkung von absorbiertem infrarotem Laserlicht eine Markierung mit großem Farbkontrast im sichtbaren Spektralbereich ergibt, zur Markierung oder Beschriftung mittels Laserlicht, wobei das Laserlicht durch den Zuschlagstoff absorbiert wird,
dadurch gekennzeichnet,
dass der Zuschlagstoff ausgewählt ist aus 0,02 bis 4,5 Massen-% Kupferhydroxid-phosphat und 0,2 bis 2,5 Massen-% Molybdän(VI)-Oxid.

2. Verwendung gemäß Anspruch 1 zur Markierung oder Beschriftung mit einem Nd-YAG-Laser (Wellenlänge 1 064 nm).

3. Verfahren zum Beschriften oder Markieren mittels Laserlicht von Formmassen, Halbzeugen oder Fertigteilen aus hochpolymerem Material, das einen Zuschlagstoff enthält, der im sichtbaren Spektralbereich (Wellenlänge 400 nm bis 750 nm) keine oder nur eine schwache Eigenfarbe hat und der unter Einwirkung von infrarotem Laserlicht eine Markierung mit großem Farbkontrast im sichtbaren Spektralbereich ergibt, wobei das Laserlicht durch den Zuschlagstoff absorbiert wird,
dadurch gekennzeichnet,
daß der Zuschlagstoff ausgewählt ist aus 0,02 bis 4,5 Massen-% Kupferhydroxid-phosphat und 0,2 bis 2,5 Massen-% Molybdän(VI)-Oxid.

4. Verfahren nach Anspruch 3, gekennzeichnet durch
- das Absorbieren von Laserlicht aus einem Nd-YAG-Laser (Wellenlänge 1 064 nm) durch den Zuschlagstoff.

5. Formmasse, Halbzeug oder Fertigteil aus hochpolymerem Material mit Ausnahme von Polyvinylchlorid, enthaltend 0,02 bis 4,5 Massen-% Kupferhydroxidphosphat.

6. Formmasse, Halbzeug oder Fertigteil aus hochpolymerem Material mit Ausnahme von Polyvinylchlorid und Polycarbonat, enthaltend 0,2 bis 2,5 Massen-% Molybdän(VI)-Oxid.

## Claims

1. The use of a moulding composition, semifinished product or finished part made from high-polymeric material which contains an additive which has only a weak inherent colour, or none at all, in the visible spectral region (wavelengths from 400 nm to 750 nm) and which gives a mark having high colour contrast in the visible spectral region under the action of absorbed infra-red laser light for marking or inscription by means of laser light, the laser light being absorbed by the additive, characterized in that the additive is selected from 0.02 to 4.5% by weight of copper hydroxide phosphate and from 0.2 to 2.5% by weight of molybdenum (VI) oxide.

2. The use according to claim 1 for marking or inscription by means of an Nd-YAG laser (wavelength 1064 nm).

3. A process for inscription or marking by means of laser light of moulding compositions, semifinished products or finished parts made from high-polymeric material which contains an additive which has only a weak inherent colour, or none at all, in the visible spectral region (wavelength of from 400 nm to 750 nm) and which gives a mark of high colour contrast in the visible spectral region under the action of infra-red laser light, the laser light being absorbed by the additive, characterized in that the additive is selected from 0.02 to 4.5% by weight of copper hydroxide phosphate and from 0.2 to 2.5% by weight of molybedenum (VI) oxide.

4. A process according to claim 3, characterized by
- absorption of laser light from an Nd-YAG laser (wavelength 1064 nm) by the additive.

5. A moulding composition, semifinished product or finished product made from high-polymeric material, with the exception of polyvinyl chloride, containing from 0.02 to 4.5% by weight of copper hydroxide phosphate.

6. A moulding composition, semifinished product or finished part made from high-polymeric material, with the exception of polyvinyl chloride and polycarbonate, containing from 0.2 to 2.5% by weight of molybdenum(VI) oxide.

## Revendications

1. Utilisation de mélanges à mouler, de semi-produits ou de pièces finies en un matériau haut polymère, qui contient un adjuvant qui, dans le domaine spectral visible (longueur d'onde de 400 à 750 nm) n'a pas de couleur propre ou n'a qu'une faible couleur propre, et qui, sous l'action de la lumière laser à infrarouge absorbée, donne dans le domaine visible du spectre un marquage présentant un fort contraste de couleur, pour marquage ou inscription à l'aide d'une lumière laser, la lumière laser étant absorbée par l'adjuvant, caractérisée en ce que l'adjuvant est choisi parmi de 0,02 à 4,5 % en masse de phosphate basique de cuivre et de 0,2 à 2,5 % en masse d'oxyde de molybdène (VI).

2. Utilisation selon la revendication 1, pour marquage ou inscription avec un laser au Nd-YAG (longueur d'onde 1064 nm).

3. Procédé d'inscription ou de marquage à l'aide d'une lumière laser de mélanges à mouler, de semi-produits ou de pièces finies en un matériau haut polymère, qui contient un adjuvant, qui dans le domaine visible du spectre (longueur d'onde 400 nm à 750 nm) n'a pas de couleur propre ou n'a qu'une faible couleur propre, et qui, sous l'action d'une lumière laser à infrarouge, donne dans le domaine visible du spectre un marquage ayant un fort contraste de couleur, caractérisé en ce que l'adjuvant est choisi parmi de 0,02 à 4,5 % en masse de phosphate basique de cuivre et de 0,2 à 2,5 % en masse d'oxyde de molybdène (VI).

4. Procédé selon la revendication 3, caractérisé par l'absorption d'une lumière laser provenant d'un laser au Nd-YAG (longueur d'onde 1064 nm) par l'adjuvant.

5. Mélange à mouler, semi-produit ou pièce finie en un matériau haut polymère, à l'exception du poly(chlo-rure de vinyle), contenant de 0,02 à 4,5 % en masse de phosphate basique de cuivre.

6. Mélange à mouler, semi-produit ou pièce finie en un matériau haut polymère, à l'exception du poly(chlo-rure de vinyle) et du polycarbonate, contenant de 0,02 à 2,5 % en masse d'oxyde de molybdène (VI).
